# EUROPÄISCHE PATENTANMELDUNG

(11) **EP 2 957 803 A1**
(43) Veröffentlichungstag der Anmeldung: **23.12.2015**
(21) Anmeldenummer: 15171084.5
(22) Anmeldetag: 09.06.2015
(51) Int. Cl.: F16L 3/13, F16L 55/035

(54) **BEFESTIGUNGSVORRICHTUNG SOWIE VERFAHREN ZUM VERBINDEN EINER BEFESTIGUNGSVORRICHTUNG INSBESONDERE MIT DRUCKMITTELFÜHRENDEN LEITUNGEN**

(30) Priorität: 10.06.2014 DE 102014210975
(71) Anmelder: Schaeffler Technologies AG & Co. KG, 91074 Herzogenaurach (DE)
(72) Erfinder: Sainton, Denis, 45520 Chevilly (FR); Goussu, Christophe, 45310 Patay (FR)

(57) **Zusammenfassung**

Die Erfindung betrifft eine Befestigungsvorrichtung sowie ein Verfahren zum Verbinden einer Befestigungsvorrichtung insbesondere mit druckmittelführenden Leitungen (4) in Kraftfahrzeugen, mit einem Befestigungselement (1), welches zumindest einen an einer Tragstruktur/Karosserie befestigbaren Haltebereich (2) und zumindest einen die Leitung (4) zumindest teilweise umgreifenden Befestigungsbereich (3) aufweist, wobei innerhalb des Befestigungsbereiches (3) ein der Schwingungs- und/oder Geräuschminderung dienendes Dämpfungselement (5) angeordnet ist und wobei das Dämpfungselement (5) eine der Innenkontur des Befestigungsbereiches angepasste Geometrie aufweist und mit dem Befestigungselement (1) eine vormontierte Baugruppe bildet und wobei die aus Befestigungselement (1) und Dämpfungselement (5) bestehende Baugruppe wird an die Leitung angebracht wird.

## Beschreibung

Die Erfindung betrifft eine Befestigungsvorrichtung, insbesondere für druckmittelführende Leitungen in Kraftfahrzeugen, mit einem Befestigungselement, das zumindest einen an einer Tragstruktur/Karosserie befestigbaren Haltebereich und zumindest einen die Leitung zumindest teilweise umgreifenden Befestigungsbereich aufweist, wobei innerhalb des Befestigungsbereiches ein der Schwingungs- und/oder Geräuschminderung dienendes Dämpfungselement angeordnet ist. Die Erfindung betrifft des Weiteren ein Verfahren zum Verbinden einer Befestigungsvorrichtung insbesondere mit druckmittelführenden Leitungen.

Rohre und Leitungen, insbesondere Brems- und Kraftstoffleitungen, werden an Kraftfahrzeugen üblicherweise mit Befestigungsmitteln, z. B. Schellen, montiert, die zur Dämpfung von Schwingungen und Vibrationen bzw. zur geräuscharmen Aufhängung Dämpfungselemente aufweisen.

So ist beispielsweise aus der DE 30 25 601 C2 eine Anordnung zum geräuscharmen Aufhängen von langgestreckten Bauteilen, wie Rohren oder Schläuchen, bekannt. Ein Befestigungsteil, wie eine Schelle, umgreift mit einem runden Abschnitt ein aus einem elastisch nachgiebigen Stoff, beispielsweise aus Gummi, bestehendes Dämpfungsglied und ist mit einem abstehenden Abschnitt an einer Karosseriewand festgelegt. Das Dämpfungsglied umgreift wiederum eine Rohrleitung und hält diese vermittels der Schelle an der Karosseriewand. Zur Montage der Rohrleitung wird zunächst die Schelle an der Karosseriewand befestigt. Dann wird die Rohrleitung in den Aufnahmespalt eingelegt. Anschließend wird das mit einem Längsschlitz versehene Dämpfungsglied zunächst radial auf die Rohrleitung aufgebracht und danach axial über diese geschoben bis es in die Aufnahmeöffnung der Schelle eindringt und dort schließlich an einem Anschlag zur Anlage kommt.

Es sind auch Befestigungsvorrichtungen für Rohrleitungen mit einem Befestigungselement und einem Dämpfungselement bekannt, bei welchen zur Montage zunächst das geschlitzte hülsenartige Dämpfungselement auf die Rohrleitung aufgebracht wird und danach das Befestigungselement in axialer oder radialer Richtung über das Dämpfungselement geschoben wird.

Der Nachteil dieser bekannten Befestigungsvorrichtungen besteht vor allem in ihrer schwierigen und zeitaufwendigen Montage. Dabei kann es auch passieren, dass es beim Aufbringen des Befestigungselementes bzw. des Dämpfungselementes auf das jeweils andere sich bereits auf der Rohrleitung befindende Teil zu einem unerwünschten Verschieben oder Verdrehen des Befestigungs- und/oder Dämpfungselementes kommt, wodurch eine sichere Funktion der Befestigungsvorrichtung nicht gewährleistet ist.

Eine in der DE 10 2010 021 411 A1 beschriebene Befestigungseinrichtung zum Befestigen einer Hydraulikleitung mit zwei Anschlussstellen, zwischen denen mindestens ein Befestigungsabschnitt der Hydraulikleitung mit Hilfe einer Befestigungsschelle an einer Tragstruktur befestigt ist, sieht zur Verbesserung von Herstellung und Montage vor, in dem Befestigungsabschnitt auf beiden Seiten der Befestigungsschelle jeweils ein zusätzliches Befestigungsmittel an der Hydraulikleitung zu befestigen, um die Hydraulikleitung mit dem Befestigungsabschnitt in axialer Richtung zu fixieren. Das zusätzliche Befestigungsmittel kann beispielsweise als Fixierclips ausgeführt oder als ein von einem Fixierschlauchabschnitt gebildeter Ringwulst axial fest an der Hydraulikleitung angebracht sein. Dabei werden die Fixierschlauchabschnitte vorzugsweise vor der Montage der Hydraulikleitung, insbesondere auch vor der Montage der Befestigungsschelle auf der Hydraulikleitung aufgeschrumpft.

Mittels zusätzlicher auf die Hydraulikleitung aufgebrachter Befestigungsmittel erfolgt bei dieser Befestigungseinrichtung zwar eine axiale Festlegung der Befestigungsschelle. Spezielle Dämpfungsmittel werden hier nicht aufgezeigt.

In der DE 10 2009 049 881 A1 wird eine Befestigungsvorrichtung für eine Druckleitung offenbart, wobei die Befestigungsvorrichtung ein Clipteil aufweist, in dessen Aufnahmeraum eine Druckleitung einsetzbar ist. Das Clipteil ist an einer Seite eines Basisteils befestigt, an dessen anderer Seite ein Montageteil zur Befestigung der Befestigungsvorrichtung an einem Trägerteil angeordnet ist. Das U-förmige Clipteil ermöglicht ein lagepositioniertes einfaches Einclipsen der Druckleitung in einen zwischen drei Schenkelbereichen gebildeten Aufnahmeraum.

In einer Ausführungsform ist hierbei der Aufnahmeraum des Clipteils mit einer elastisch federnden Kunststoffschicht versehen, um so eine schwingungsdämpfende Wirkung zwischen der Befestigungsvorrichtung und der Druckleitung zu erzielen. Auf die Anbringung der Kunststoffschicht wird nicht näher eingegangen.

Die Aufgabe der Erfindung besteht darin, eine Befestigungsvorrichtung sowie ein Verfahren zum Verbinden einer Befestigungsvorrichtung insbesondere mit druckmittelführenden Leitungen in Kraftfahrzeugen, vorzuschlagen, mittels welchen eine einfache Montage und eine funktionssichere Befestigung an der Leitung realisierbar sind.

Die Aufgabe wird mit den Merkmalen des unabhängigen Anspruchs 1 und/oder des unabhängigen Anspruchs 10 gelöst. Weitere vorteilhafte Ausgestaltungen ergeben sich aus den Unteransprüchen.

Bei einer Befestigungsvorrichtung, insbesondere für druckmittelführende Leitungen in Kraftfahrzeugen, mit einem Befestigungselement, welches zumindest einen an einer Tragstruktur/Karosserie befestigbaren Haltebereich und zumindest einen die Leitung zumindest teilweise umgreifenden Befestigungsbereich aufweist, wobei innerhalb des Befestigungsbereiches ein der Schwingungs- und/oder Geräuschminderung dienendes Dämpfungselement angeordnet ist, weist erfindungsgemäß das Dämpfungselement eine der Innenkontur des Befestigungsbereiches angepasste Geometrie auf und bildet mit dem Befestigungselement eine vormontierte Baugruppe, welche an die Leitung anbringbar ist.

In vorteilhafter Weise weist der Befestigungsbereich des Befestigungselementes einen in Bezug zu einer Längsachse der Leitung im Wesentlichen U-förmig ausgebildeten Querschnitt auf und ist mit dem im Wesentlichen analog ausgebildeten Dämpfungselement kraft- und/oder formschlüssig verbindbar. Dabei besitzt zumindest das Dämpfungselement elastische Eigenschaften und/oder besteht aus einem elastischen Material.

Der Befestigungsbereich des Befestigungselementes umfasst bevorzugt einen Aufnahmeraum zur Aufnahme der Leitung und/oder des Dämpfungselementes, wobei an den freien Enden des Befestigungsbereiches radial schräg nach außen gerichtete Endabschnitte ausgebildet sind.

Ebenso umfasst das Dämpfungselement bevorzugt einen Aufnahmeraum zur Aufnahme der Leitung, wobei an den freien Enden des Dämpfungselementes radial außen wulstförmige Fortsätze ausgebildet sind, welche mit den Endabschnitten des Befestigungsbereiches korrespondieren.

Eine bevorzugte Ausführungsform sieht vor, dass jeder der beiden Fortsätze des Dämpfungselementes eine Ausnehmung aufweist, mit welcher jeweils ein Endabschnitt des Befestigungsbereiches in Eingriff bringbar ist.

In einer vorteilhaften Ausführungsform weist das Dämpfungselement in axialer Richtung zumindest an einem Ende radial außen einen Flansch auf, welcher eine axiale Anlage für ein Ende des Befestigungsbereiches bildet.

In vorteilhafter Weise ist ein Außendurchmesser des Dämpfungselementes kleiner als ein Innendurchmesser des Befestigungsbereiches und ein Innendurchmesser des Dämpfungselementes ist größer als ein Außendurchmesser der Leitung.

Vorzugsweise ist eine axiale Länge des Dämpfungselementes/der Ausnehmungen größer als eine axiale Länge des Befestigungsbereiches/der Endabschnitte.

Bei einem Verfahren zum Verbinden einer Befestigungsvorrichtung insbesondere mit druckmittelführenden Leitungen in Kraftfahrzeugen, mit einem Befestigungselement, welches zumindest einen an einer Tragstruktur/Karosserie befestigbaren Haltebereich und zumindest einen die Leitung zumindest teilweise umgreifenden Befestigungsbereich aufweist, wobei innerhalb des Befestigungsbereiches ein der Schwingungs- und/oder Geräuschminderung dienendes Dämpfungselement vorgesehen ist, wird erfindungsgemäß zunächst das eine der Innenkontur des Befestigungsbereiches angepasste Geometrie aufweisende Dämpfungselement mit dem Befestigungselement zu einer Baugruppe verbunden, und danach wird die aus Befestigungselement und Dämpfungselement bestehende Baugruppe an die Leitung angebracht.

Die Erfindung wird nachstehend anhand eines Ausführungsbeispiels und zugehöriger Zeichnungen näher erläutert. Es zeigen:
Fig. 1 eine räumliche Darstellung eines Befestigungselementes der erfindungsgemäßen Befestigungsvorrichtung,
Fig. 2 zwei räumliche Darstellungen eines Dämpfungselementes der erfindungsgemäßen Befestigungsvorrichtung,
Fig. 3 das Befestigungselement nach Fig. 1 und das Dämpfungselement nach Fig. 2 vor ihrer Verbindung,
Fig. 4 das Befestigungselement nach Fig. 1 und das Dämpfungselement nach Fig. 2 in einem montierten Zustand,
Fig. 5 die aus Befestigungselement und Dämpfungselement bestehende Baugruppe nach Fig. 4 vor der Anbringung an eine Leitung,
Fig. 6 die aus Befestigungselement und Dämpfungselement bestehende Baugruppe nach der Anbringung an die Leitung.

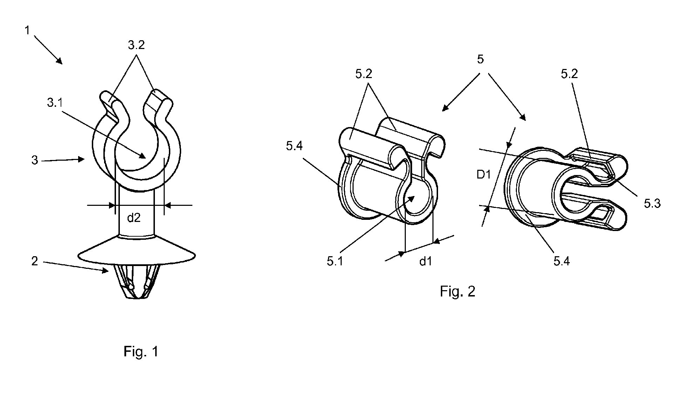

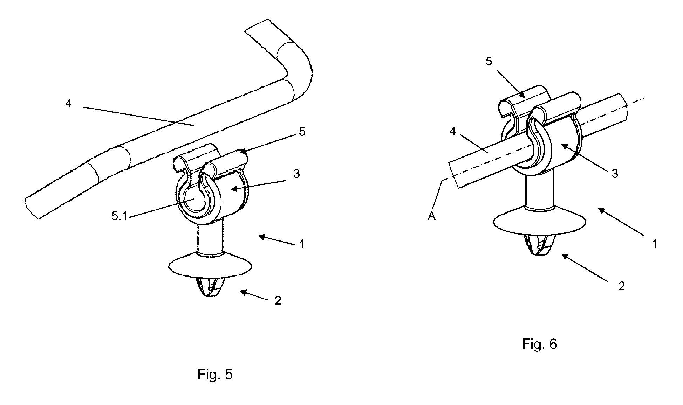

In Fig. 1 ist ein Befestigungselement 1 dargestellt, welches einen Haltebereich 2 zur Anbringung an einen hier nicht gezeigten Montageort, beispielsweise an eine Karosseriewand eines Kraftfahrzeuges, aufweist. Des Weiteren besitzt das Befestigungselement 1 einen Befestigungsbereich 3 mit einem Aufnahmeraum 3.1 mit einem Innendurchmesser d2 zur Aufnahme einer Hydraulikleitung 4 (s. Fig. 5) und/oder zur Aufnahme eines Dämpfungselementes 5 (s. Fig.2). Der Befestigungsbereich 3 ist im Querschnitt gesehen im Wesentlichen U-förmig ausgebildet, wobei die bogenförmigen Schenkel im Bereich des offenen Endes aufeinander zu geneigt sind und hier mit radial schräg nach außen gerichteten Endabschnitten 3.2 versehen sind. Die hier beschriebene Sichtweise bezieht sich auf eine Längsachse A der Hydraulikleitung 4 (s. Fig. 6). Der Befestigungsbereich 3 bildet so eine Art Klemmkontur aus, die beispielsweise an die Leitung 4 anclipsbar oder mit dem Dämpfungselement 5 verbindbar ist.

Fig. 2 zeigt das in den Befestigungsbereich 3 des Befestigungselementes 1 einsetzbare Dämpfungselement 5 in einer räumlichen Darstellung. Zum besseren Verständnis ist das Dämpfungselement 5 in zwei unterschiedlichen Ansichten gezeigt. Das Dämpfungselement 5 weist eine im Wesentlichen zu dem Befestigungsbereich 3 analoge Geometrie auf. So besitzt das Dämpfungselement 5 eine an die Innenkonturen des Befestigungsbereiches 3 angepasste, im Wesentlichen U-förmige, mit bogenförmigen Schenkeln ausgeführte Ausbildung mit einem Aufnahmeraum 5.1 für die Hydraulikleitung 4. Der Außendurchmesser D1 des Dämpfungselementes 5 ist dabei kleiner als der Innendurchmesser d2 des Befestigungsbereiches 3 und der Innendurchmesser d1 des Dämpfungselementes 5 ist größer als der Außendurchmesser D der Hydraulikleitung 4. Das Dämpfungselement 5 weist ebenfalls radial nach außen gerichtete wulstförmige Fortsätze 5.2 auf, die mit den schrägen Endabschnitten 3.2 des Befestigungselementes 1 in Eingriff bringbar sind. Zu diesem Zweck weisen die wulstförmigen Fortsätze 5.2 eine zu den Endabschnitten 3.2 des Befestigungsbereiches 3 jeweils komplementär ausgebildete Ausnehmung 5.3 auf. Dabei ist eine axiale Länge L1 des Dämpfungselementes 5 etwas größer als eine axiale Länge L2 des Befestigungsbereiches 3. Es wird hierbei davon ausgegangen, dass die Länge L1 des Dämpfungselementes 5 auch in etwa der axialen Länge der Ausnehmungen 5.3 und die Länge L2 des Befestigungsbereiches 3 auch in etwa der axialen Länge der Endabschnitte 3.2 entsprechen. Es ist aber auch denkbar, dass die Endabschnitte 3.2 eine von der Länge L2 des Befestigungsbereiches 3 und die Ausnehmungen 5.3 eine von der Länge L1 des Dämpfungselementes 5 abweichende axiale Länge besitzen. Des Weiteren weist das Dämpfungselement 5 an einem axialen Ende einen radial nach außen gerichteten Flansch 5.4 auf.

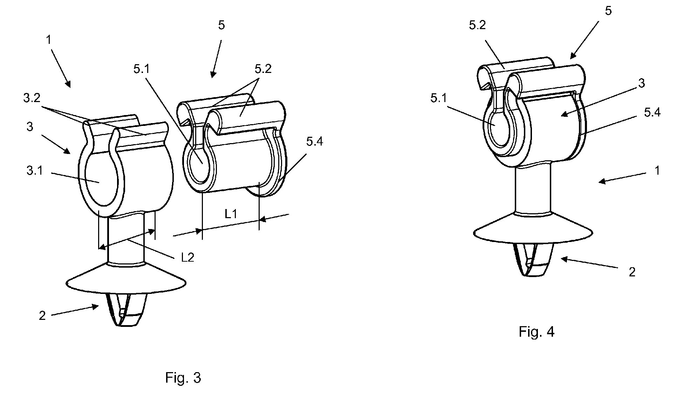

In Fig. 3 sind das Befestigungselement 1 und das Dämpfungselement 5 in einer Position vor ihrem Zusammenbau gezeigt. Bei dieser Vormontage werden das Befestigungselement 1 und das Dämpfungselement 5 zu einer Baugruppe bzw. Vormontageeinheit miteinander verbunden. Dabei wird das Dämpfungselement 5 in axialer Richtung in den Befestigungsbereich 3 des Befestigungselementes 1 geschoben, wobei die wulstartigen Fortsätze 5.2 des Dämpfungselementes 5 die Endabschnitte 3.2 des Befestigungsbereiches 3 radial außen hintergreifen. Die Endabschnitte 3.2 korrespondieren dabei mit den Ausnehmungen 5.3 und der den Aufnahmeraum 5.1 umfassende Bereich des Dämpfungselementes 5 gelangt in den Aufnahmeraum 3.1 des Befestigungsbereiches 3. Diese Bewegung in Längsrichtung ist beendet, wenn der Flansch 5.4 des Dämpfungselementes 5 an dem entsprechenden Ende des Befestigungsbereiches 3 des Befestigungselementes 3 zur Anlage kommt. Die Montage wird dabei durch die clipsartig funktionierenden Endabschnitte 3.2 des Befestigungsbereiches 3 bzw. die Fortsätze 5.2 des Dämpfungselementes 5 erleichtert.

In Fig. 4 ist die aus Befestigungselement 1 und Dämpfungselement 5 bestehende vormontierte Baugruppe gezeigt. Der Befestigungsbereich 3 und das im Wesentlichen analog ausgebildete Dämpfungselement 5 sind miteinander verbunden. Die Fortsätze 5.2 mit den Ausnehmungen 5.3 des Dämpfungselementes 5 umgreifen die Endabschnitte 3.2 des Befestigungsbereiches 3, der in axialer Richtung an dem Flansch 5.4 anliegt, wodurch eine radiale und axiale Fixierung des Dämpfungselementes 5 erfolgt.

Die Fig. 5 zeigt die aus Befestigungselement 1 und Dämpfungselement 5 bestehende Baugruppe vor der Anbringung an die Hydraulikleitung 4. Zur Befestigung wird die Baugruppe über die clipsartig schnappenden Endabschnitte 3.2 des Befestigungselementes 1 bzw. Fortsätze 5.2 des Dämpfungselementes 5 an den Außenumfang der Hydraulikleitung 4 gedrückt, wodurch diese in den Aufnahmeraum 5.1 des Dämpfungselementes 5 und somit auch in den das Dämpfungselement 5 umfassenden Aufnahmeraum 3.1 des Befestigungselementes 1 gelangt.

In Fig. 6 ist schließlich die an die Hydraulikleitung 4 montierte Baugruppe - Befestigungselement 1 und Dämpfungselement 5 - dargestellt. Zur Endmontage an der Hydraulikleitung 4 ist somit nur ein Schritt nötig, wodurch sich die Montage stark vereinfacht. Außerdem wird die Fixierung und die Orientierung der Anordnung der Befestigungsvorrichtung auf der Hydraulikleitung 4 optimiert. Eine fehlerhafte Verbindung, hervorgerufen beispielsweise durch ein Verrutschen des Befestigungselementes 1 und/oder des Dämpfungselementes 5, ist auf Grund der analogen Geometrien mit eindeutiger Zuordnung der korrespondierenden Teile von Befestigungsbereich 3 und Dämpfungselement 5 ausgeschlossen.

Dabei kann bei der Herstellung der Befestigungsvorrichtung auf bereits vorhandene Befestigungselemente 1 - aus Kunststoff oder Metall bestehend - zurückgegriffen werden. Deren Geometrie muss nicht geändert werden. Es ist lediglich das Dämpfungselement 5 - vorzugsweise aus Gummi bestehend - mit einer dem Befestigungsbereich 3 des Befestigungselementes 1 angepassten Geometrie herzustellen. Die erfindungsgemäße Lösung ist sowohl für Kunststoff- als auch für Stahlrohre einsetzbar. Es ist jeweils nur der Innendurchmesser d1 des Dämpfungselementes 5 an die Größe des Außendurchmessers D der Leitung 4 anzupassen.

### Bezugszeichenliste

- 1: Befestigungselement
- 2: Haltebereich
- 3: Befestigungsbereich
- 3.1: Aufnahmeraum
- 3.2: Endabschnitte
- 4: Hydraulikleitung/Leitung
- 5: Dämpfungselement
- 5.1: Aufnahmeraum
- 5.2: Fortsätze
- 5.3: Ausnehmung
- 5.4: Flansch
- A: Längsachse
- D: Außendurchmesser der Hydraulikleitung
- D1: Außendurchmesser des Dämpfungselementes
- d1: Innendurchmesser des Dämpfungselementes
- d2: Innendurchmesser des Befestigungsbereiches
- L1: axiale Länge des Dämpfungselementes/der Ausnehmungen
- L2: axiale Länge des Befestigungsbereiches/der Endabschnitte

## Patentansprüche

1. Befestigungsvorrichtung, insbesondere für druckmittelführende Leitungen (4) in Kraftfahrzeugen, mit einem Befestigungselement (1), welches zumindest einen an einer Tragstruktur/Karosserie befestigbaren Haltebereich (2) und zumindest einen die Leitung (4) zumindest teilweise umgreifenden Befestigungsbereich (3) aufweist, wobei innerhalb des Befestigungsbereiches (3) ein der Schwingungs- und/oder Geräuschminderung dienendes Dämpfungselement (5) angeordnet ist, **dadurch gekennzeichnet, dass** das Dämpfungselement (5) eine der Innenkontur des Befestigungsbereiches (3) angepasste Geometrie aufweist und mit dem Befestigungselement (1) eine vormontierte Baugruppe bildet.

2. Befestigungsvorrichtung nach Anspruch 1, **dadurch gekennzeichnet, dass** der Befestigungsbereich (3) des Befestigungselementes (1) einen in Bezug zu einer Längsachse (A) der Leitung (4) im Wesentlichen U-förmig ausgebildeten Querschnitt aufweist und mit dem im Wesentlichen analog ausgebildeten Dämpfungselement (5) kraft- und/oder formschlüssig verbindbar ist.

3. Befestigungsvorrichtung nach Anspruch 1 oder 2, **dadurch gekennzeichnet, dass** zumindest das Dämpfungselement (5) elastische Eigenschaften aufweist und/oder aus einem elastischen Material besteht.

4. Befestigungsvorrichtung nach einem der Ansprüche 1 bis 3, **dadurch gekennzeichnet, dass** der Befestigungsbereich (3) des Befestigungselementes (1) einen Aufnahmeraum (3.1) zur Aufnahme der Leitung (4) und/oder des Dämpfungselementes (5) umfasst, wobei an den freien Enden des Befestigungsbereiches (3) radial schräg nach außen gerichtete Endabschnitte (3.2) ausgebildet sind.

5. Befestigungsvorrichtung nach Anspruch 4, **dadurch gekennzeichnet, dass** das Dämpfungselement (5) einen Aufnahmeraum (5.1) zur Aufnahme der Leitung (4) umfasst, wobei an den freien Enden des Dämpfungselementes (5) radial außen wulstförmige Fortsätze (5.2) ausgebildet sind, welche mit den Endabschnitten (3.2) des Befestigungsbereiches (3) korrespondieren.

6. Befestigungsvorrichtung nach Anspruch 5, **dadurch gekennzeichnet, dass** jeder der beiden Fortsätze (5.2) des Dämpfungselementes (5) eine Ausnehmung (5.3) aufweist, mit welcher jeweils ein Endabschnitt (3.2) des Befestigungsbereiches (3) in Eingriff bringbar ist.

7. Befestigungsvorrichtung nach einem der Ansprüche 1 bis 6, **dadurch gekennzeichnet, dass** das Dämpfungselement (5) in axialer Richtung zumindest an einem Ende radial außen einen Flansch (5.4) aufweist, welcher eine axiale Anlage für ein Ende des Befestigungsbereiches (3) bildet.

8. Befestigungsvorrichtung nach einem der Ansprüche 1 bis 7, **dadurch gekennzeichnet, dass** ein Außendurchmesser (D1) des Dämpfungselementes (5) kleiner ist als ein Innendurchmesser (d2) des Befestigungsbereiches (3) und ein Innendurchmesser (d1) des Dämpfungselementes (5) größer ist als ein Außendurchmesser (D) der Leitung (4).

9. Befestigungsvorrichtung nach einem der Ansprüche 6 bis 8, **dadurch gekennzeichnet, dass** eine axiale Länge (L1) des Dämpfungselementes (5)/der Ausnehmungen (5.3) größer ist als eine axiale Länge (L2) des Befestigungsbereiches (3)/der Endabschnitte (3.2).

10. Verfahren zum Verbinden einer Befestigungsvorrichtung insbesondere mit druckmittelführenden Leitungen (4) in Kraftfahrzeugen, mit einem Befestigungselement (1), welches zumindest einen an einer Tragstruktur/Karosserie befestigbaren Haltebereich (2) und zumindest einen die Leitung (4) zumindest teilweise umgreifenden Befestigungsbereich (3) aufweist, wobei innerhalb des Befestigungsbereiches (3) ein der Schwingungs- und/oder Geräuschminderung dienendes Dämpfungselement (5) vorgesehen ist, **dadurch gekennzeichnet, dass**
- zunächst das mit einer der Innenkontur des Befestigungsbereiches (3) angepassten Geometrie versehene Dämpfungselement (5) mit dem Befestigungselement (1) zu einer vormontierten Baugruppe verbunden wird,
- danach die aus Befestigungselement (1) und Dämpfungselement (5) bestehende Baugruppe an die Leitung (4) angebracht wird.
